# EUROPEAN PATENT SPECIFICATION

(11) **EP 2 890 251 B1**
(45) Date of publication and mention of the grant of the patent: **03.04.2019**
(21) Application number: 12775320.0
(22) Date of filing: 30.08.2012
(51) Int. Cl.: A23L 27/60, A23L 19/00

(54) **FOOD COMPOSITION COMPRISING BALSAMIC VINEGAR AND TOMATO CONCENTRATE**
LEBENSMITTELZUSAMMENSETZUNG MIT BALSAMESSIG UND TOMATENKONZENTRAT
COMPOSITION ALIMENTAIRE CONTENANT DU VINAIGRE BALSAMIQUE ET DU CONCENTRÉ DE TOMATE

(43) Date of publication of application: 08.07.2015
(73) Proprietor: Acetificio Marcello de Nigris S.r.l., 80021 Afragola (NA) (IT)
(72) Inventor: DE NIGRIS, Armando, I-80021 Afragola (NA) (IT)
(74) Representative: Perani & Partners S.p.A.
(86) International application number: PCT/IT2012/000263
(87) International publication number: WO 2014/033761

(56) References cited:
- EP-A2- 0 380 820
- EP-A2- 0 898 899
- US-A- 4 556 576
- US-A- 4 557 799
- US-A- 5 565 233
- DATABASE GNPD [Online] MINTEL; May 2012 (2012-05), Anonymous: "Ketchup with Balsamic Vinegar of Modena", XP002697196, retrieved from www.gnpd.com Database accession no. 1810387
- Anonymous: "Ketchup", Internet , 17 April 2012 (2012-04-17), pages 1-1, XP002697197, Retrieved from the Internet: URL:http://web.archive.org/web/20120417194 438/http://www.fenco.it/eng/ketchup-proces sing.asp [retrieved on 2013-05-16]
- Anonymous: "Stephan Vacutherm System", Internet , March 2007 (2007-03), pages 1-3, XP002697240, Retrieved from the Internet: URL:http://www.stephan-machinery.com/htdoc s/download/VacuthermSystem/Maerz_2007_Vacu therm_System_englisch.pdf [retrieved on 2013-05-17]
- DATABASE GNPD [Online] MINTEL; May 2012 (2012-05), Anonymous: "Tomato Ketchup with Balsamic Vinegar", XP002697198, retrieved from www.gnpd.com Database accession no. 1788022
- DATABASE GNPD [Online] MINTEL; August 2011 (2011-08), Anonymous: "Pesto Rosso with Balsamic Vinegar from Modena", XP002697199, retrieved from www.gnpd.com Database accession no. 1606311
- BONONI M ET AL: "Determination of furan by headspace solid-phase microextraction-gas chromatography-mass spectrometry in balsamic vinegars of Modena (Italy)", JOURNAL OF FOOD COMPOSITION AND ANALYSIS, ACADEMIC PRESS, LONDON, GB, vol. 22, no. 1, 1 February 2009 (2009-02-01), pages 79-82, XP025976460, ISSN: 0889-1575, DOI: 10.1016/J.JFCA.2008.07.011 [retrieved on 2008-09-26]

## Description

The present invention relates to a composition with a basis of balsamic vinegar of Modena IGP and tomato concentrate, to a method for its preparation and to its use in food preparations.

The use of tomato-based sauces for food use is widespread throughout the world.

The sauce commonly called "ketchup", which comprises, in addition to tomato sauce or concentrate, sugar, vinegar, salt and spices, is one of the more widespread commercial dressings. However, the presence of an acid ingredient such as vinegar can be unpleasant and can lead to side effects such as gastric irritation, in predisposed individuals. Moreover, in the commercial preparations it is often necessary to use excipients, such as preservatives and flavor enhancers, which may give rise to food intolerance.

"Ketchup-like" preparations are known with fruit or vegetable as a partial or total replacement of wine vinegar (e.g. JP2016948, JP55071473, JP 1281056). Understandably, said compositions actually have organoleptic characteristics which are different from those of the traditional ketchup.

The balsamic vinegar of Modena is a condiment with an acidity lower than that of the ordinary vinegar and is better tolerated by patients with disorders such as gastritis or ulcers excess gastric secretions.

In addition, it has a high content of polyphenols derived from grape must to which properties antihypertensive, antiallergic, antimutagenic and anticancer activities have been ascribes.

The name of balsamic vinegar of Modena IGP (ABM IGP) is internationally protected. The EC Regulation n. 583/09 provides that for the production of ABM IGP it is prohibited to add any substance except caramel (2% maximum) for color stability. However, the use of ABM IGP as an ingredient of sauces is limited by the fact that ABM IGP may impart a brown color to the preparation, which may become darker over time, rendering it unsightly to some consumers.

Another well-known disadvantage of commercially available ketchup-like condiments is their difficulty in dosaging them from the containers. In fact, since the consistency of ketchup varies depending on the mechanical stresses to which it is subjected (thixotropy), passing from semisolid to liquid in a virtually instantaneously manner, it is difficult to dose ketchup in the desired amount from the container on a plate or on a dish.

Example of such condiments is the ketchup preparation with balsamic vinegar of Modena IGP, produced by the Applicant, whose description is retrievable from www.gnpd.com, with the record ID: 181038 (published on 01/05/2012).

An object of the present invention is to provide a ketchup-type composition comprising balsamic vinegar of Modena IGP with color resembling that of the known ketchup sauces and that is stable over time.

One purpose of the present invention is to provide a ketchup-type composition which can be dosed easily by consumers.

Another object of the present invention is to provide a simple and convenient method for the preparation of a stable ketchup-type composition comprising balsamic vinegar of Modena IGP.

In accordance with the present invention, these objects, and others that will be highlighted below, are achieved by a composition for use in foodstuffs comprising:
- Tomato concentrate,
- Balsamic vinegar of Modena,
- A sugar or sugary substance,
- At least one thickener, and
- Water,
wherein the composition has a content of caramel of less than 0.0001% by weight / total weight of the composition and concentration of between 30 and 38°Bx.

These objects have also been achieved through a method for preparing the above-described method for the preparation of the composition as described above which comprises the following steps:
i. separately mixing with water at a temperature between 20 and 45°C the tomato concentrate, the sugar or sweet substance and the at least one thickener, obtaining three separate mixtures;
ii. separately homogenizing the mixture of tomato concentrate with water and the mixture of sugar or sweet substance with water and salt obtained in step i.;
iii. combining in an evaporator at reduced pressure the homogenised mixtures obtained in step ii. and the mixture of water and thickener obtained in step i.;
iv. heating the composition obtained in step iii. at a temperature between 25 and 60°C at a pressure lower than atmospheric pressure;
v. adding balsamic vinegar of Modena IGP-free caramel to the composition obtained in step iv.;
vi. heating the composition obtained in step v. at a temperature between 25 and 60°C and at a pressure lower than atmospheric pressure for a time comprised between 5 and 60 minutes.

In accordance with the present invention, these aims have been also achieved through the use of the composition described above as a spreadable cream food.

In the context of the present invention, the term "balsamic vinegar of Modena IGP" means a balsamic vinegar with the analytical and organoleptic properties and production according to the specifications of EC Regulation no. 583/09, also made from organic cultivation, caramel-free, i.e. with a content of caramel below 0.0001% by weight / total weight of the composition.

In the context of the present invention, "tomato concentrate" refers to a preparation obtained by a method comprising concentrating the tomato juice, through the methods known to the skilled person, with a dry residue typically, but not exclusively, between 12 and 40% by weight/weight.

The consistency of the preparations according to the present invention is measured by a Bostwick consistometer (Reference: 1991, "Il controllo della qualita dei derivati del pomodoro", Ed. Stazione Sperimentale per l'Industria della Conserva Alimentari in Parma) without dilution and after a 30 seconds run at a temperature of 25°C.

In the context of the present invention,°Bx indicates the Brix degrees, i.e. a measure of the amount of solid substances in a composition, which are measured through tools and methodologies known to those skilled in the art, for example with a refractometer or a pycnometer at 20°C.

It is understood that the standard steps of the method according to the present invention, as the homogenization or mixing, are carried out through techniques which are known to the person skilled in the art, unless otherwise specified.

In one aspect, the present invention relates to a food composition comprising:
- tomato concentrate,
- balsamic vinegar of Modena,
- a sugar or sugary substance,
- at least one thickener, and
- water,
wherein the composition has a content of caramel less than 0.0001% by weight / total weight of the composition and concentration of between 30 and 38°Bx.

It was surprisingly found that the composition according to the present invention, in spite of its high content of ABM IGP with acidity less than that of wine vinegar, has a color very similar to the preparations of traditional type ketchup. Moreover, the preparation according to the invention is surprisingly stable, does not tend to darken significantly over time and over storage it maintains, in general, the initial organoleptic characteristics such as low acidity, high content of polyphenols etc. This result was achieved without further addition of preservatives or antioxidants, which are potentially harmful to health. Without wishing to be bound by theory, it is believed that this advantage is due to the use of balsamic vinegar of Modena IGP containing virtually no caramel. This aspect is particularly important since the addition of caramel is used in the production of balsamic vinegar as a stabilizer of the color, while it is surprisingly found that the composition according to the present invention is stable precisely in the absence of caramel.

It was also found that the composition according to the present invention can be used as a spreadable product for the seasoning of foods, contrary to the traditional ketchup-type preparations, that are not suitable for such use as they become practically liquid in the application of a minimum pressure. Preferably, the composition according to the invention has a Bostwick consistency between 1 and 10 cm at 25°C.

The present composition may also include other substances for use as food flavorings (aromas include e.g. pizza, chili, barbecue or garlic, onion, basil, rosemary, sage, aubergine, coriander, ginger, cumin, curry, paprika, black pepper, pink pepper , mustard, cheese, mushrooms, truffles, brandy, cognac, marsala wine, prepared for roasting), spices generally known to the skilled person, natural extracts of vegetable or animal for food etc..

Preferably, the composition according to the invention comprises a salt for food use, at least a spice, an extract and / or a food flavoring. More preferably, said salt is sodium chloride.

The composition according to the invention may also contain grape juice concentrate, which is an important source of sugars, organic acids such as tartaric, glycolic and glyoxylic, mineral acids and polyphenols.

In a preferred embodiment, the composition according to the invention comprises tomato concentrate at 37 °Bx in an amount comprised between 10 and 25% (preferably 13:18%) sugar or sweet substance between 10 and 40%, (preferably 15 and 25%) balsamic vinegar of Modena IGP between 8 and 35% (preferably 12 and 16%) at least one thickener between 1 and 8%, (preferably 3 and 4%) salt between 1 and 8% (preferably 2 to 3%), spices and/or an herbal extract between 0.01 and 3% (preferably between 0.1 and 1%) and water between 30 and 75% (preferably between 40 and 65%) (all concentrations are in weight/total weight of the composition). Preferably, the composition according to the invention has total acidity 0.2 and 3.5% and pH between 2.2 and 4.

As further ingredients of the composition according to the invention, it is possible to use all substances known to those skilled in the art of food formulations.

In the composition of the present invention, all substances known as thickeners to those skilled in the art of food preparations can be used.

Preferably, the thickener is xanthan gum, modified starch, starch, malt dextrin, pectin, guar gum, sodium acetate, tara gum, gelatins or mixtures thereof.

More preferably, in the composition according to the invention at least one thickener is modified corn starch or xanthan gum.

Non-limiting examples of sugars or sugary substances usable in the composition according to the present invention are mono and disaccharides such as glucose, fructose, sucrose or mixtures thereof or sugar-containing fruit preparations or natural products.

Preferably, the composition according to the invention the sugar or sugary substance is sucrose, dehydrated glucose, fructose, dried, cooked or concentrated grape must, glucose syrup, rectified concentrated grape must, grape juice concentrate, honey or mixtures thereof.

More preferably, in the composition according to the invention the sugar is sucrose.

In one aspect, the present invention comprises a method for the preparation of the composition as described above which comprises the following steps:
i. separately mixing with water at a temperature between 20 and 45°C the tomato concentrate, the sugar or sweet substance and the at least one thickener, obtaining three separate mixtures;
ii. separately homogenizing the mixture of tomato concentrate with water and the mixture of sugar or sweet substance with water and salt obtained in step i.;
iii. combining in an evaporator at reduced pressure homogenised mixtures obtained in step ii. and the mixture of water and thickener obtained in step i.;
iv. heating the composition obtained in step iii. at a temperature between 25 and 60°C at a pressure lower than atmospheric pressure;
v. adding balsamic vinegar of Modena IGP-free caramel to the composition obtained in step iv.;
vi. heating the composition obtained in step v. at a temperature between 25 and 60°C and at a pressure lower than atmospheric pressure for a time comprised between 5 and 60 minutes.

It has been found that the method according to the present invention allows to obtain in an efficient and cost-effective manner a composition that is stable over time and that has the organoleptic characteristics and health benefits conferred by balsamic vinegar of Modena IGP without the use of preservatives, stabilizers or other additives. One of the advantages is that the method of the present invention allows to prepare the ketchup-type composition with low temperatures, minimizing the energy required and the environmental impact. Furthermore, the method according to the present invention is easily scalable to industrial level through routine operations known to those skilled in the art. Preferably, the method of the invention further comprises the addition to the composition of step v. of at least one spice and/or of an extract or food flavoring before heating of the composition thus obtained under the conditions of step vi.

Preferably, in the method according to the invention the sugar or sweet substance is sucrose, dehydrated glucose, fructose dehydrated, cooked or concentrated grape must, glucose syrup, rectified concentrated must, grape juice concentrate, honey or mixtures thereof, and the thickener is xanthan gum or modified starch, starch, malt dextrin, pectin, guar gum, sodium acetate, tara gum, gelatins or mixtures thereof.

In one aspect, the present invention relates to the use of the ketchup-type composition comprising tomato concentrate and balsamic vinegar of Modena IGP described above as food spreadable cream.

By virtue of its physical and organoleptic properties, in addition to the traditional uses of sauces like ketchup, the composition of the invention can be spread on dishes or bread and bakery products in general, or can easily be used for garnishing and decoration of food preparations.

## Claims

1. Composition for food use comprising:
- tomato concentrate;
- balsamic vinegar of Modena IGP,
- a sugar or sugary substance,
- at least one thickener, and
- water,
wherein the composition has a content of caramel less than 0.0001% by weight / total weight of the composition and concentration of between 30 and 38°Bx.

2. The composition according to claim 1 which comprises a salt for food use, at least one spice and/or extract or food flavoring.

3. The composition according to one of the preceding claims having a Bostwick consistency between 1 and 10 cm at 25°C.

4. The composition according to one of the preceding claims comprising tomato concentrate at 37 °Bx in an amount comprised between 13 and 18%, sugar or sweet substance between 15 and 25%, balsamic vinegar of Modena IGP between 12 and 16%, at least one thickener between 3 and 4%, between 2 and 3% salt, spices and / or herbal extract between 0 and 0.1% and water between 40 and 65%.

5. The composition according to one of the preceding claims wherein the composition has total acidity 0.2 to 3.5% and pH between 2.2 and 4.

6. The composition according to one of the preceding claims wherein at least one thickener is xanthan gum or modified starch, starch, malt dextrin, pectin, guar gum, sodium acetate, tara gum, gelatins or mixtures thereof, and sugar or sweet substance is sucrose, dehydrated glucose, fructose, dried, cooked or concentrated grape must, glucose syrup, rectified concentrated grape must, grape juice concentrate, honey or mixtures thereof.

7. Method for the preparation of the composition according to one of the preceding claims which comprises the following steps:
i. separately mixing with water at a temperature between 20 and 45°C the tomato concentrate, sugar or sweet substance and the at least one thickener, obtaining three separate mixtures;
ii. separately homogenizing the mixture of tomato concentrate with water and the mixture of sugar or sweet substance with water and salt obtained in step i.;
iii. combining in an evaporator at reduced pressure the homogenised mixtures obtained in step ii. and the mixture of water and thickener obtained in step i.;
iv. heating the composition obtained in step iii. at a temperature between 25 and 60°C at a pressure lower than atmospheric pressure;
v. adding to the composition obtained in step iv. caramel-free balsamic vinegar of Modena IGP;
vi. heating the composition obtained in step v. at a temperature between 25 and 60°C and at a pressure lower than atmospheric pressure for a time comprised between 5 and 60 minutes.

8. The method according to claim 7 comprising adding to the composition of step v. of at least one spice and/or extract or food flavoring before heating of the composition thus obtained under the conditions of step vi.

9. The method according to one of claims 7-8, wherein the sugar or sugary substance is sucrose, dehydrated glucose, fructose, dried, cooked or concentrated grape must, glucose syrup, rectified concentrated grape must, grape juice concentrate, honey or mixtures thereof , and the thickener is xanthan gum or modified starch, starch, malt dextrin, pectin, guar gum, sodium acetate, tara gum, gelatins or mixtures thereof.

10. Use of the composition according to one of claims 1-6 as a spreadable cream food.

## Patentansprüche

1. Zusammensetzung zur Verwendung in Lebensmitteln, die:
- Tomatenkonzentrat,
- Balsamessig aus Modena IGP,
- Zucker oder eine zuckerhaltige Substanz,
- mindestens ein Verdickungsmittel und
- Wasser
umfasst, wobei die Zusammensetzung einen Karamellgehalt von weniger als 0,0001 Gew.-%/Gesamtgewicht der Zusammensetzung und eine Konzentration zwischen 30 und 38°Bx aufweist.

2. Zusammensetzung nach Anspruch 1, die ein Salz zur Verwendung in Lebensmitteln, mindestens ein Gewürz und/oder einen Extrakt oder ein Lebensmittelaroma umfasst.

3. Zusammensetzung nach einem der vorhergehenden Ansprüche mit einer Bostwick-Konsistenz zwischen 1 und 10 cm bei 25°C.

4. Zusammensetzung nach einem der vorhergehenden Ansprüche, die Tomatenkonzentrat bei 37°Bx in einer Menge zwischen 13 und 18%, Zucker oder Süßstoff zwischen 15 und 25%, Balsamessig aus Modena IGP zwischen 12 und 16%, ein Verdickungsmittel zwischen 3 und 4%, Salz zwischen 2 und 3%, Gewürze und/oder Kräuterextrakt zwischen 0 und 0,1% und Wasser zwischen 40 und 65% umfasst.

5. Zusammensetzung nach einem der vorhergehenden Ansprüche, wobei die Zusammensetzung eine Gesamtsäure von 0,2 bis 3,5% und einen pH-Wert zwischen 2,2 und 4 aufweist.

6. Zusammensetzung nach einem der vorhergehenden Ansprüche, wobei mindestens ein Verdickungsmittel Xanthane-gummi oder modifizierte Stärke, Stärke, Malzdextrin, Pektin, Guarkernmehl, Natriumacetat, Tara-gummi, Gelatinen oder Mischungen davon ist und Zucker oder Süßstoff Saccharose, dehydrierte Glukose, Fructose, getrockneter, gekochter oder konzentrierter Traubenmost, Glukosesirup, rektifiziertes Traubenmostkonzentrat, Traubensaftkonzentrat, Honig oder Mischungen davon ist.

7. Verfahren zur Herstellung der Zusammensetzung nach einem der vorhergehenden Ansprüche, umfassend die folgenden Schritte:
i. getrenntes Mischen des Tomatenkonzentrats, des Zuckers oder des Süßstoffes und des mindestens einen Verdickungsmittels mit Wasser bei einer Temperatur zwischen 20 und 45°C, wobei drei getrennte Mischungen erhalten werden;
ii. getrenntes Homogenisieren der Mischung aus Tomatenkonzentrat mit Wasser und der im Schritt i. erhaltenen Mischung aus Zucker oder Süßstoff mit Wasser und Salz;
iii. Kombinieren der im Schritt ii. erhaltenen homogenisierten Gemische und des im Schritt i. erhaltenen Gemisches aus Wasser und Verdickungsmittel in einem Verdampfer bei vermindertem Druck;
iv. Erwärmen der im Schritt iii. erhaltenen Zusammensetzung bei einer Temperatur zwischen 25 und 60°C, bei einem Druck, der niedriger als der Atmosphärendruck ist;
v. Zugeben zu der im Schritt iv. erhaltenen Zusammensetzung karamellfreien Balsamessig aus Modena IGP;
vi. Erwärmen der im Schritt v. erhaltenen Zusammensetzung für eine Zeit zwischen 5 und 60 Minuten bei einer Temperatur zwischen 25 und 60°C und bei einem Druck, der niedriger als der Atmosphärendruck ist.

8. Verfahren nach Anspruch 7, das die Zugabe von mindestens einem Gewürz und/oder Extrakt oder Lebensmittelaroma zu der Zusammensetzung vom Schritt v. umfasst, bevor die so erhaltene Zusammensetzung unter den Bedingungen von Schritt vi. erhitzt wird.

9. Verfahren nach einem der Ansprüche 7 bis 8, wobei der Zucker oder die zuckerhaltige Substanz Saccharose, dehydrierte Glucose, Fructose, getrockneter, gekochter oder konzentrierter Traubenmost, Glukosesirup, rektifiziertes Traubenmostkonzentrat, Traubensaftkonzentrat, Honig oder Mischungen ist und das Verdickungsmittel Xanthane-gummi oder modifizierte Stärke, Stärke, Malzdextrin, Pektin, Guar-gummi, Natriumacetat, Tara-gummi, Gelatine oder Mischungen davon ist.

10. Verwendung der Zusammensetzung nach einem der Ansprüche 1-6 als streichfähiges cremiges Essen.

## Revendications

1. Composition à usage alimentaire comprenant :
- du concentré de tomate,
- du vinaigre balsamique de Modène IGP,
- un sucre ou une substance sucrée,
- au moins un épaississant, et
- de l'eau,
dans laquelle la composition a une teneur en caramel inférieure à 0,0001% en poids/poids total de la composition et une concentration comprise entre 30 et 38 °Bx.

2. Composition selon la revendication 1, qui comprend un sel à usage alimentaire, au moins une épice et/ou un extrait ou un arôme alimentaire.

3. Composition selon l'une des revendications précédentes, ayant une consistance de Bostwick comprise entre 1 et 10 cm à 25°C.

4. Composition selon l'une des revendications précédentes, comprenant du concentré de tomate à 37 °Bx en quantité comprise entre 13 et 18%, du sucre ou une substance sucrée en quantité comprise entre 15 et 25%, du vinaigre balsamique de Modène IGP en quantité comprise entre 12 et 16%, au moins un épaississant en quantité comprise entre 3 et 4%, du sel en quantité comprise entre 2 et 3%, des épices et/ou de l'extrait d'herbes en quantité comprise entre 0 et 0,1% et de l'eau en quantité comprise entre 40 et 65%.

5. Composition selon l'une des revendications précédentes, dans laquelle la composition a une acidité totale de 0,2 à 3,5% et un pH compris entre 2,2 et 4.

6. Composition selon l'une des revendications précédentes, dans laquelle au moins un épaississant est de la gomme de xanthane ou de l'amidon modifié, de l'amidon, de la dextrine de malt, de la pectine, de la gomme de guar, de l'acétate de sodium, de la gomme de tara, des gélatines ou leurs mélanges, et le sucre ou la substance sucrée est du saccharose, du glucose déshydraté, du fructose, du moût de raisin séché, cuit ou concentré, du sirop de glucose, du moût de raisin concentré rectifié, du concentré de jus de raisin, du miel ou leurs mélanges.

7. Procédé de préparation de la composition selon l'une des revendications précédentes comprenant les étapes suivantes :
i. mélanger séparément avec de l'eau à une température comprise entre 20 et 45°C le concentré de tomate, le sucre ou la substance sucrée et au moins un épaississant, obtenant ainsi trois mélanges séparés ;
ii. homogénéiser séparément le mélange de concentré de tomate avec de l'eau et le mélange de sucre ou de substance sucrée avec de l'eau et du sel obtenu à l'étape i. ;
iii. combiner dans un évaporateur à pression réduite les mélanges homogénéisés obtenus à l'étape ii. et le mélange d'eau et d'épaississant obtenu à l'étape i. ;
iv. chauffer la composition obtenue à l'étape iii. à une température comprise entre 25 et 60°C à une pression inférieure à la pression atmosphérique ;
v. ajouter à la composition obtenue à l'étape iv à du vinaigre balsamique de Modène IGP sans caramel ;
vi. chauffer la composition obtenue à l'étape v. à une température comprise entre 25 et 60°C et à une pression inférieure à la pression atmosphérique pendant une durée comprise entre 5 et 60 minutes.

8. Procédé selon la revendication 7, consistant à ajouter à la composition de l'étape v. au moins un épice et/ou un extrait ou un aromatisant alimentaire avant le chauffage de la composition ainsi obtenue dans les conditions de l'étape vi.

9. Procédé selon l'une des revendications 7 à 8, dans lequel le sucre ou la substance sucrée est du saccharose, du glucose déshydraté, du fructose, du moût de raisin séché, cuit ou concentré, du sirop de glucose, du moût de raisin concentré rectifié, du concentré de jus de raisin, du miel ou leurs mélanges et l'épaississant est de la gomme de xanthane ou de l'amidon modifié, de l'amidon, de la dextrine de malt, de la pectine, de la gomme de guar, de l'acétate de sodium, de la gomme de tara, de la gélatine ou leurs mélanges.

10. Utilisation de la composition selon l'une des revendications 1 à 6 comme crème alimentaire à tartiner.
